# EUROPEAN PATENT SPECIFICATION

(11) **EP 1 319 493 B1**
(45) Date of publication and mention of the grant of the patent: **19.03.2008**
(21) Application number: 02027578.0
(22) Date of filing: 10.12.2002
(51) Int. Cl.: B29C 51/32, B29C 51/44

(54) **Method and apparatus for in-mould cutting of thermoformed objects withdrawable from the mould with the still partially connected residual web**
Verfahren und Vorrichtung zum Ausstanzen tiefgezogener Formteile, die noch teilweise mit der Restbahn verbunden sind und damit entformt werden
Procédé et dispositif pour détourer en moule des pièces thermoformées, démoulables par la bavure encore connecter partiellement avec des pièces

(30) Priority: 11.12.2001 IT VR20010132
(43) Date of publication of application: 18.06.2003
(73) Proprietor: ISAP OMV GROUP S.P.A., 37025 Parona (IT)
(72) Inventor: Padovani, Pietro, Dr., 37126 Verona (IT)
(74) Representative: Reniero, Cirillo Silvano

(56) References cited:
- EP-A- 0 686 476
- EP-A- 0 970 798
- DE-A- 3 202 770
- DE-A- 4 224 009
- US-A- 3 650 655
- US-A- 3 917 788
- US-A- 4 236 885

## Description

The present invention relates to a method of, and an apparatus for, in-mould cutting thermoformed objects to be withdrawn from the mould without using a pick-up plate, or withdrawing assembly.

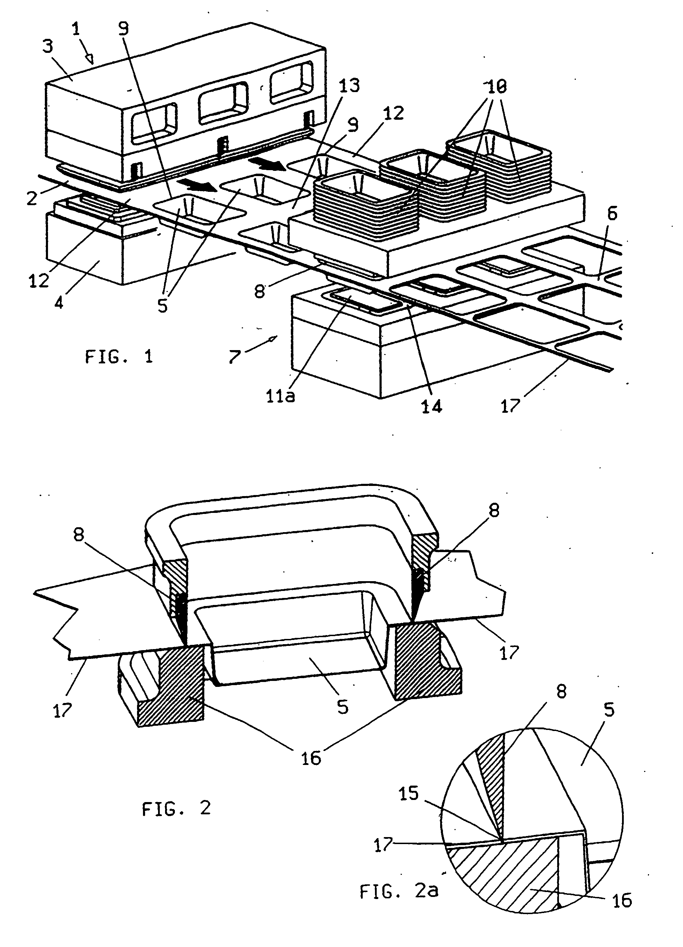

According to the prior art, as known, cutting thermoformed objects in the mould and out of the mould is substantially made according to two cutting techniques designated known as: socket punch-cutting and punch-and-die cutting. Such techniques are briefly described below with reference to Figures 1 to 10 of the accompanying drawings, in which:
Figure 1 shows a diagrammatic perspective view, slightly from top, of a thermoforming press for thermoformed objects (tubs) starting from a sheet or plate of thermoformable material thermoformed in a female and male mould, subsequent out-of-mould cutting by means of socket punch and end stacking of each moulding of three thermoformed objects at a stacking station;
Figure 2 is a diagrammatic perspective cross-section view of a device for cutting the whole peripheral edge of a thermoformed object shown in Fig. 1 by means of a socket punch cutting element cooperating with a respective abutment plane onto which the socket punch element abuts;
Figure 2a shows a detail of Fig. 2 on an enlarged scale and highlights the working position of the cutting edge of the hollow or socket punch against an abutment plane;
Figure 3 is a perspective view of a detail of a lifting and stacking stem while lifting and stacking a thermoformed object from its receiving seat formed in a dummy female die at the stacking station shown in Fig. 1 after the thermoformed object has been fully cut out of mould owing to the cutting of a socket punch;
Figure 4 shows a diagrammatic perspective view of a thermoforming partly in-mould socket cutting press in which thermoformed objects are withdrawn from a thermoforming mould by means of the residual web and eventually stacked at a stacking station arranged downstream of the thermoforming press;
Figure 5 illustrates a perspective view on an enlarged scale of a detail of Fig. 4 where the presence of the witness beads is highlighted along the outer peripheral edge of a thermoformed object shown in Fig. 4;
Fig. 6 shows a cross-section view on an enlarged scale of a detail of a socket punch arranged to cut a thermoformed object in a thermoforming mould while leaving witness beads on the peripheral edge of the thermoformed object according to the operating sequence shown in Fig. 4.
Figure 6a shows a diagrammatic perspective view on an enlarged scale of a detail of Fig. 6 of the working position of the cutting edge of a socket punch having discontinuities in the cutting edge thereof for obtaining witness beads;
Figure 7 shows a thermoforming press that cuts thermoformed objects out of the forming mould by means of a punch and die at an end stacking station;
Figure 8 is a perspective cross-section view on an enlarged scale of a detail of the press shown in Fig. 7, regarding an out-of-mould punch-and-die cutting device located at the stacking station;
Figure 9 shows a diagrammatic perspective cross-section view of a punch and its respective die for out-of-mould cutting operations affecting the whole edge of each object in an object moulding and carried out by means of the apparatus shown in Fig. 7;
Figure 9a shows a diagrammatic perspective view on an enlarged scale of a detail shown in Fig. 9 concerning the shape and working related characteristic features of an out-of-mould punch-and-die cutting device;
Figure 10 shows a diagrammatic perspective view of a thermoforming press having one working station, wherein thermoforming and uninterrupted cutting by means of a punch and die throughout the whole outer edge of a thermoformed object, lifting of the object from the female die by means of an extractor formed by a stem and a pushing plate take place, and further shows one of a plurality of systems for removing thermoformed objects cut off from the residual web, *e*.*g*. an air blow system.

The above listed Figures 1 to 3 illustrate an apparatus for carrying out a method of thermoforming objects starting from a sheet or plate of a thermoformable material. More particularly, as shown in Fig. 1, such a method substantially comprises the following steps.

By using a thermoforming mould 1 comprising a(n) (upper) male die and a (lower) female mould 4, while same are still in their open position, a sheet or slab of a thermoformable material 2 is fed between the die and the mould. The die 1 is moved to its closed position in order to start the method of thermoforming a moulding of thermoformed objects 5. The die 1 is then opened (i.e. the die and the mould are moved away from each other) to make it possible for the moulding of objects 5 to be extracted from the female mould by the residual web 6 and forwarded to a stacking station 7.

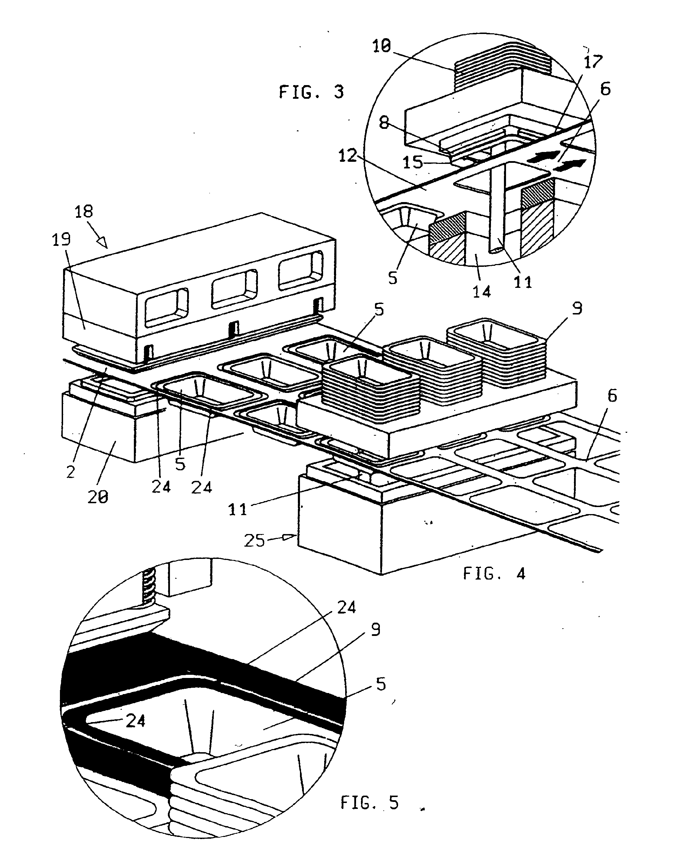

At the stacking station 7 the thermoformed objects 5 of each moulding are subjected to a cutting off operation by means of a respective socket punch 8 designed to act along the whole peripheral edge 9 of objects 5. Immediately after cutting or complete separation of the thermoformed objects from the residual web 5, the objects are arranged in stacks 10 by means of stacking stems 11 that control a respective plate 11a, as better shown in Fig. 3.

The residual web 6 is moved away from the stacking station and fed, *e*.*g*. to a mill for being recycled. Depending upon needs, before the final stacking step, working or treatment steps may be carried out on the thermoformed objects 5, *e.g.* they can be punched at the bottom thereof.

The above described process, however, has a series of drawbacks that will be dealt with below. As a matter of fact, out-of-mould cutting necessarily requires that the stacking station 7, where cutting takes place, be located downstream of the thermoforming station 1. This fact implies that a predetermined distance exists between thermoforming press and cutting-stacking station. The thermoformed objects 5 take a predetermined length of time to be displaced that distance bearing in mind that the feeding movement of the waste or residual web 6 together with the objects 5 attached thereto occurs at a predetermined pace, i.e. the feeding pitch of the web or plate 2 to thermoforming station 1 keeps the thermoformed objects 5 exposed to the ambient conditions which vary in time, e.g. between day and night, summer and winter and so on, which results in uneven stabilisation of the objects 5.

Immediately after the thermoforming process, the warm thermoformed material is actually subjected to a whole range of phenomena while cooling, *e.g.* contraction, stabilisation and so forth, that on the other hand do not exert a uniform and consistent effect on all portions of residual web 6 connected to the thermoformed objects 5. Owing to the different temperature gradients arising between the various areas of a moulding of thermoformed objects 5, *e.g.* between the outer edges 12 that are colder than the inner warmer areas 13 of a moulding, the dimensional stabilisation process does not occur in a uniform and repetitive fashion throughout the mould, but rather it develops locally and in different times in the various areas thereof. This entails a tension build-up between adjacent areas, whereby the various areas of the residual web 6 are subjected to a different degree of warping or other type of deformation with the consequence that the thermoformed objects 5 of one moulding have a different and random axial orientation with loss of regular and symmetrical positioning or trim they had while being withdrawn from the thermoforming mould 1.

Once the above mentioned distance separating the thermoforming station from the cutting-stacking station 7 has been covered, the moulding of objects 5 is received by a dummy female mould 14 whereby proceeding to the cutting operation. During such an operation, the objects of a moulding 5 that have undergone undesired trim modifications referred to above and thus have a random orientation one with respect to the other are forced by the dummy mould 14 to resume their former trim they had upon leaving the thermoforming mould 1. Owing to such a constraint exerted by the dummy mould 14, the thermoformed objects 5 are subjected to further stress and strain which are responsible for deformations that arise at the cutting area of the objects 5 and cause unacceptable defects, e.g. mismatching of the outer outline with respect to the inner outline of the thermoformed objects 5.

Other drawbacks to be faced with such method are due to the use of a specific cutting technique by means of a hollow or socket punch.

As better shown in the cross-section shown in Fig. 2, a cutting operation along the peripheral edge 9 of each thermoformed object 5 entails that the cutting edge 15 (Fig. 2a) of the socket punch 8 while abutting against the abutment plane 16 must exert onto the peripheral edge of the object 5 such a pressure as to cut throughout the material, thereby cutting off each thermoformed object 5 through its entire thickness 17 along the whole outline of each object 5.

Such cutting technique is, however, subject to several drawbacks.

The intermittent and cyclic impact of the cutting edge 15 of the socket punch 8 against the abutment plane 16 causes quick wear of the cutting edge of the socket punch, and even after a short working time period the socket cutting edge 15 of the socket punch actually becomes blunt, i.e. it becomes thicker. A relatively thicker, and thus deformed, cutting edge not only has a greater resistance to penetration, but also clings to the thermoformed objects, in particular during its backward run, thereby loading itself with residual web 6 and burr, so as to become unsuitable for carrying out a neat and precise cut, which results in poor quality of the thermoformed objects 5.

Moreover, owing to the slight abutment surface between cutting edge 15 of the socket punch 8 and the abutment plane 16, it is impossible to apply high cutting pressures since an excessive pressure would irreparably damage the cutting edge 15 of the hollow punch 8 right from the beginning. However, since the cutting edge 15 of the socket punch 8 repeatedly abuts onto the same surface portion of the abutment plane 16 that is always the same for each new moulding of thermoformed objects 5, a localized and continuous wear of the abutment plane 16 is produced which is further accelerated owing to irregular deformed shape of the cutting edge 15 of the socket punch.

In order to prevent the cutting edge 15 of socket punch 8 from wearing too quickly, it has been suggested to use an abutment plane 16 made of a material softer than that of the socket punch 8. However, also this expedient was unsuitable for definitely solving the problem as the working life of the abutment plane 16, and above all that of the cutting edge of the socket punch are lengthened only slightly.

The solution shown in Figures 4 to 6 relates to another prior art method, e.g. that disclosed in European Patent EP-0.904.926 concerning the manufacture of a thermoformed object starting from a web or sheet of thermoformable material. More particularly, as shown in Fig. 4, also such prior art method comprises three main steps.

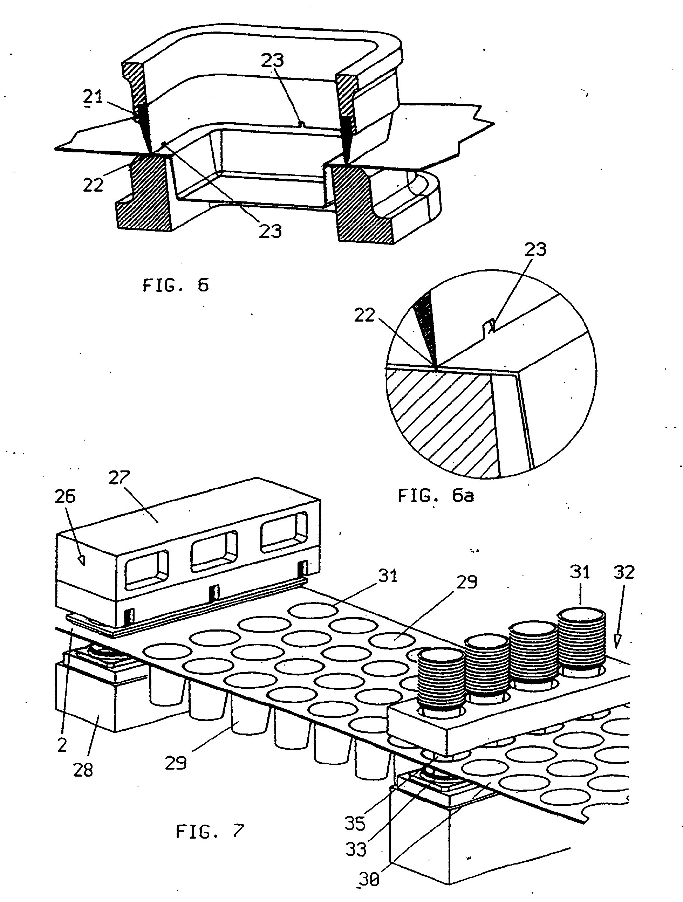

In the first step, when the mould 18 is still in its open position, a sheet of thermoformable material 2 is fed between the two dies: male die 19 and female die or mould 20 and, once the sheet has been set in position, the dies are closed and the thermoforming process for obtaining objects 5 takes place which is followed, while the dies are still in their closed position, by a partly cutting operation along the peripheral edge 9 of each thermoformed object 5 by means of a socket punch 21 suitably shaped for that purpose. Along its cutting edge 22 the socket punch 21 has some discontinuities or recesses 23 at which cutting on the outer edge 9 of each thermoformed object 5 is missing, as shown in the cross-section of Figs. 6 and 6a. The dies 18 is then opened to make it possible to withdraw the thermoformed objects 5 by means of the waste or residual web 6 which is still connected to each object 5 through one or more thin connecting zones or beads, termed witnesses 24 formed at the discontinuities or recesses 23 in the cutting edge 22 of the socket punch (Figure 5).

In the second step, the residual web 6 in its stepwise displacement from the thermoforming press conveys the thermoformed objects 5 to a stacking station 25 where, right before being stacked, the thermoformed objects 5 are severed from the residual web 6 by simply tearing the witness beads 24, e.g. by means of lifting plates controlled by respective stems 11.

In the third step, starting from the stacking station 25, the residual web 6 is moved away from the thermoformed objects 5 and forwarded e.g. to a mill for being recycled. If desired, before the final stacking step, working and treatment of the thermoformed objects 5, e.g. at a punching station, can be provided.

Although the above described method of cutting in the forming dies or moulds 18 with witness beads 24 obtained by socket punches is suitable for ensuring better performance with respect to the out-of-mould cutting method by means of socket punches 8, as shown in Fig. 1, it is nevertheless affected by serious problems, namely all the drawbacks of cutting by means of a socket punch 8 as shown in Fig. 1 that are substantially those concerning quick damaging of the cutting edge 15, wear of the abutment plane and excessive amount of scraps among the thermoformed objects.

The solution shown in Figures 7 to 9 shows a prior art method of whole out-of-mould cutting along the peripheral edge of the thermoformed objects but by means of a so called punch and die device. This method substantially comprises three steps (Figure 7):

In a first step, when the die 26 is still in its open position, a tape or slab 2 of thermoformable material is located between the die 27 and the mould 28 and once tape positioning has been completed and the die 26 has been closed, a thermoforming process for obtaining objects 29 takes place. Then the die 26 is then opened to allow the thermoformed objects 29 to be withdrawn which are still securely attached to the residual web 30 along their entire outer edge 31.

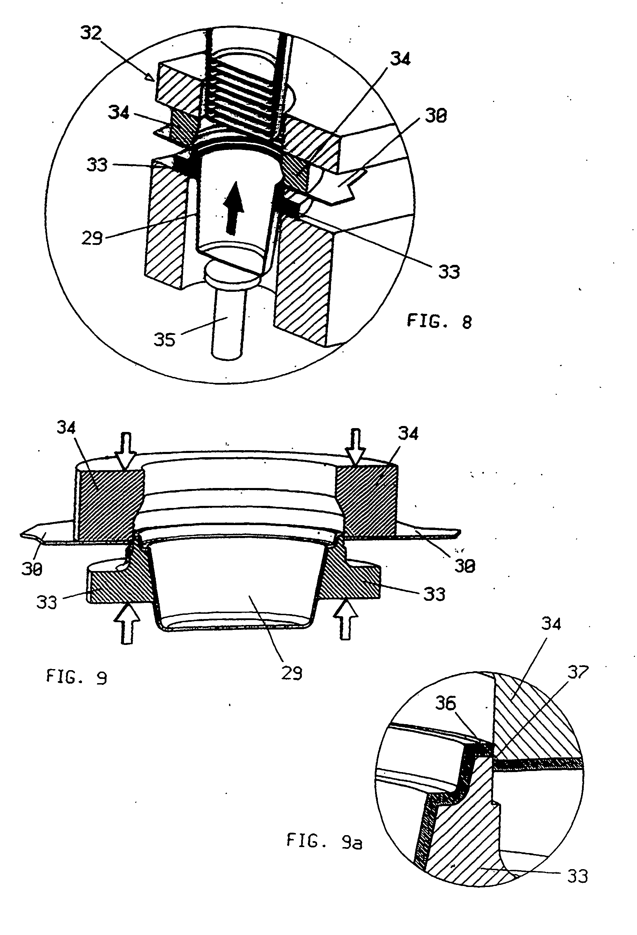

During a second step, the thermoformed objects 29 are displaced in a stepwise fashion by the residual web 30 to a cutting-stacking station 32, where the thermoformed objects 29 are first separated from the residual web 30 by means of a cutting device comprising a punch 33 and a die 34, and are then stacked by means of stacking stems 35, as better shown in Fig. 8.

In a final step, starting from the working station 32 the residual web 30 is moved away from the thermoformed objects 29 and forwarded to a mill for being recycled.

It will be noted that, although in comparison with the two methods described above this method has some advantages, *e.g.* it does not require frequent intervention for replacing its cutting means, nevertheless it is affected by the same drawbacks as in the out-of-mould cutting method shown in Figure 1.

In any case, the advantages brought about by the adoption of the punch 33 and die 34 cutting technique with respect to the two above-described methods are the following:
- perfect and long lasting cut since the cutting edges of the punch and the die are coplanar and concentric, as shown in detail in Figs. 9 and 9a;
- a remarkably longer life of punch 33 and die 34, as the only wearing factor is due to friction caused by the continuous contact and rubbing between tool and thermoformable material;
- possibility of applying virtually unlimited cutting pressures since the cutting edges 36 and 37 of the punch 33 and die 34, respectively, are coplanar and concentric, as shown in Fig. 9a, and do not abut one against the other.

As for the out-of-mould cutting method by means of a socket punch shown in Fig. 1, also the out-of-mould cutting method by means of a punch and die is such that perfect alignment and centring of the thermoformed objects 29 with respect to the cutting device is difficult to achieve, and this often results in a peripheral cut not perfectly centred and symmetrical with respect to the thermoformed object 29.

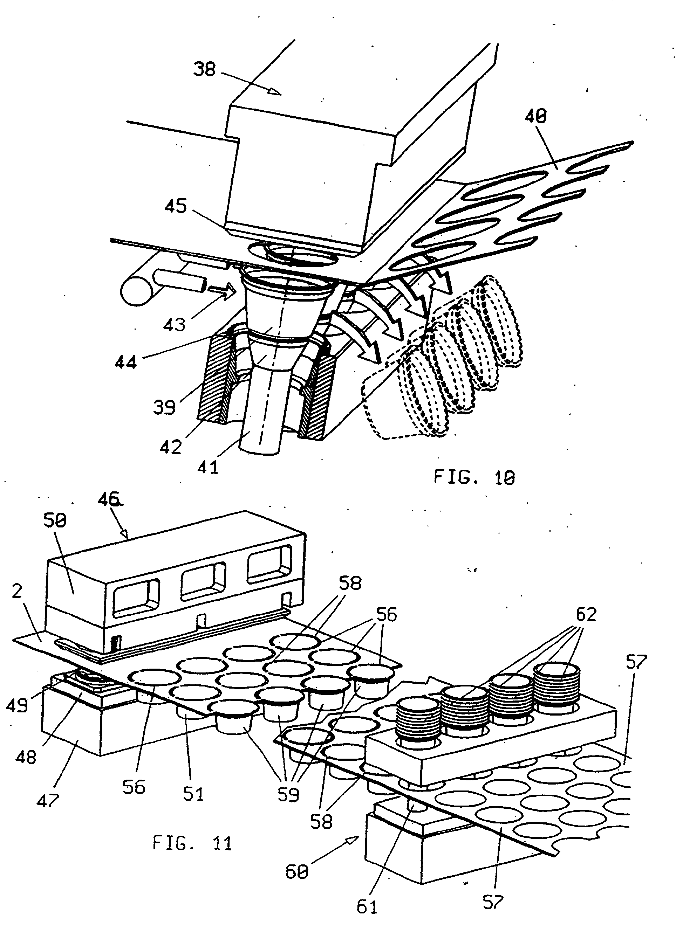

A method, shown in Fig. 10, was also proposed that comprises thermoforming and cutting thermoformed objects 39 in one die 38, and thus full severing from the residual web 40. Extraction of the thermoformed objects 39 from the female mould is accomplished through the combined effect of lifting by a respective stem 41 with an extraction plate 42, and one or more compressed air jets 43 that cause thermoformed objects 39 randomly to move away from die 38.

Cutting in the mould 38 by means of a punch 44 and die 45 cutting device makes it possible to attain some advantages, such as:
- the cut is perfectly centred on the object 39;
- cut precision not affected by dimensional instability of the still warm object 39;
- quality and cut precision are long lasting.

Even with this method, however, serious drawbacks are experienced owing to the fact that, after the thermoformed objects 39 have been withdrawn from the die 38, the same are loose, and thus no longer suitable for being displaceable with precision. This results in a more laborious stacking operation which requires the thermoformed objects 39 independent and randomly located one with respect to the other to be orderly arranged.

The main object of the present invention is to provide a thermoforming and in-the-mould cutting method designed to eliminate or substantially reduce the drawbacks experienced with the solutions of the prior art.

Another object of the present invention is to provide an apparatus for carrying out the above method which is highly reliable and suitable for eliminating almost all dead times due to the frequent replacements of the cutting device.

Not last object of the present invention is to provide an apparatus designed to carry out a greater number of thermoforming and cutting cycles than that achievable by means of any conventional thermoforming and cutting method.

According to a first aspect of the present invention, there is provided a thermoforming and cutting method comprising the following sequence of operations:
- intermittently feeding a tape or plate of a thermoformable material to a thermoforming press;
- thermoforming and partly cutting the said tape or plate in a mould to obtain at least one thermoformed object surrounded by residual web;
and it is characterised in that the said partial cutting operation is carried out by punch and die cutting means, in that the said cutting extend all along the peripheral edge of each thermoformed object and has at least one discontinuity with the formation of at least one very small connection area, or "witness bead" between each thermoformed object and residual web, and in that, after said partial cutting operation, the thermoformed object or objects are moved away from the thermoforming press by means of said thermoforming residual web by being connected thereto at each witness bead.

According to a further aspect of the present invention, there is provided an for thermoforming and in-the-mould partly cutting apparatus for carrying out the above method, which apparatus comprises at least one press for thermoforming and in-the-mould partly cutting at least one thermoformed object surrounded by residual web, a punch and die cutting means for each thermoformed object, and is characterised in that the said cutting means have cutting edges at which at least one recess is provided which is designed to ensure that at least one very small connection area, or "witness bead", is formed between thermoformed object and residual web.

Further aspects and advantages of the present invention will be better apparent from the following description of a preferred but not exclusive embodiment of an apparatus for thermoforming and in-the-mould partly cutting given by way of indicative not limiting example as shown in the accompanying drawings, in which:
Figure 11 shows a diagrammatic perspective view of an plant for thermoforming and in-the-mould partly cutting, thereby obtaining witness beads to be formed, by means of punch and die and subsequent stacking of the thermoformed objects;

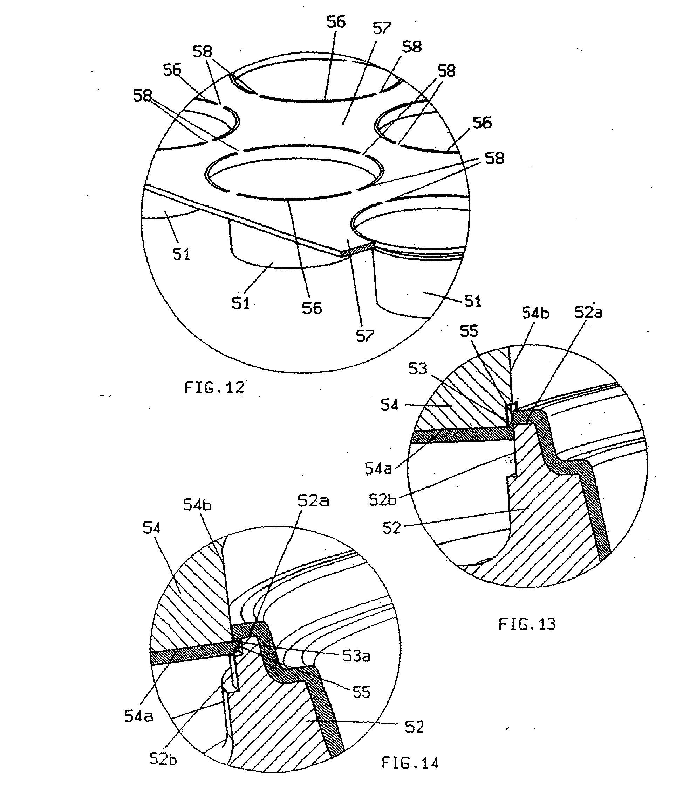

Figure 12 shows a diagrammatic perspective view on an enlarged scale of a detail of Fig. 11 of the geometrical configuration and arrangement of the witness beads along the outer peripheral edge of thermoformed objects;
Figure 13 shows a diagrammatic perspective cross-section view of a detail of the specific structure of a punch and die cutting device at a recess or notch in the die to allow a witness bead to be formed between thermoformed object and residual web; and
Figure 14 is a diagrammatic perspective cross-section view of a detail of the particular structure of a punch and die cutting device at a recess or notch in the punch to obtain a witness bead between thermoformed object and residual web.

As shown in Figures 11 to 14, an apparatus 46 for thermoforming and in-the-mould partly cutting with formation of witness beads comprises a base 47 supporting a support frame (not shown in the drawings) in which a female mould 48 formed with thermoforming recesses or seats 49 (located underneath in the shown embodiment), and a male die 50 (located above) having as many thermoforming plugs (not shown in the drawings), as thermoforming recesses 49. Moulds 48 and dies 50 can be displaced together, and moved away from, each other to carry out the various thermoforming steps of a sheet or plate of thermoformable material stepwise fed therebetween. Around each recess 49 formed in the female die 48 designed to mould a thermoformed object 51 from the sheet or tape made of thermoformable material 2 an edge 52 is formed which has a rectified planar head surface 52a and a lateral surface 52b also rectified and extending normal to the head surface 52a. The two surfaces 52a and 52b thus form a sharp edge 53 which forms the cutting edge designed to work as explained below.

Around each plug of the male die 50 a contouring jacket 54 having an inner rectified contouring surface 54b having the same configuration as the outer surface 52b (and thus usually cylindrical in shape) and sized so as to precisely fit around the outer surface 52b. At its front end, the cylindrical surface 54b is adjacent to a rectified planar surface 54b extending on a plane normal to the surface 54b, so as to define the sharp cutting edge 53 therewith.

With the above described structure, the edge 52 is a punch element designed to penetrate into the jacket 54, which thus acts as a die, to form a punch and die cutting device. At the cutting edge of the die (Fig. 13) or at the cutting edge of the punch (Fig. 14) two or more notches or recesses 55 are provided, preferably displaced at a uniform angular distance. In use, immediately after the male die 50 and the female mould 48 have been closed one against the other, a thermoforming process is carried out during which the warm male die punches 50 heatedly deform a respective portion of tape or plate 2 of thermoformable material, thus causing it to take the shape of its respective cavity 49 formed in the female mould 48 to obtain a thermoformed object 51. The male die and female mould are further moved closer to each other, thereby causing the cutting or severing of the peripheral edge 56 of each object 51 owing to the combined action of the cutting edges of their respective punch and die cutting devices. However, as notches or recesses 55 are provided, the thermoformed objects 51 are not fully severed from residual web 57 since a small integral portion remains at each notch 55, in jargon termed witness bead 58, suitable for keeping a respective thermoformed object 51 constrained in a loose and weak way to the residual web 57, as better shown in Fig. 12.

Then the die is then opened, *i.e.* the male die 48 and female mould 50 are mutually spaced apart, whilst at the same time each thermoformed object 51 is lifted in the female die, as is conventional in the state of the art, until it is moved out of its respective thermoforming seat 49. At this stage, the residual web 57 is caused to advance stepwise, while carrying with it the thermoformed objects 51, which are thus moved away from the die in a controlled fashion keeping the same relative positioning with respect to each other as that they had in the female mould 48.

On the other hand, owing to the very small number and the size slightness of the witness beads 58, the still warm thermoformed objects 51 are no longer subjected to the torsional stress transmitted to them by the residual web 57, while getting cool, because of different temperature gradients building up between different areas of the residual web, but are still free to cool down and getting stabilised practically without constraints or constriction. At the stacking station 60, *e.g.* of a conventional type, a number of stems 61 provided with respective plates (not shown in the drawing of Fig. 11) at top thereof as great as the number of objects 51 in a moulding carry out the lifting of the objects 51 during which the objects are subjected to tearing in order to break their respective witness beads 58 to be eventually orderly stacked into stacks 62. Thus, besides obtaining high quality and defect-free thermoformed objects, practically with no rejects, another important advantage is accomplished, namely a thermoforming plant 46 with no mechanical pick-up means for withdrawing and moving away the thermoformed objects 51 can be used, owing to the fact that the thermoformed objects are moved away from the thermoforming die by the residual web 57.

The invention as described above is susceptible to numerous modifications and variations within its protection scope as defined by the claims.

The disclosure in Italian patent application No. VR2001A000132 from which priority is claimed is incorporated herein by reference.

Any reference sign following technical features in any claim has been provided to increase intelligibility of the claim and shall not be construed as limiting the scope of the claim.

## Claims

1. A thermoforming and cutting method comprising the following sequence of steps:
- intermittently feeding a tape or plate of a thermoformable material to a thermoforming press;
- thermoforming and partly cutting the said tape or plate in a mould to obtain at least one thermoformed object surrounded by residual web;
**characterised in that** the said partial cutting operation is carried out by punch and die cutting means (52, 54), and **in that** the said cutting is effected all along the peripheral edge of each thermoformed object and provides at least one discontinuity (55) with formation of at least one very small connecting area or "witness bead" (58) between each thermoformed object (51) and said residual web (57).

2. A method according to claim 1, **characterised in that** after said partial cutting operation, the thermoformed object or objects (51) are moved away from the thermoforming press (46) by said thermoforming residual web (57) by being connected thereto at each witness bead (58).

3. An apparatus for carrying out the method according to claim 1 or 2, comprising at least one press (46) for thermoforming and in-the-mould (48, 50) partly cutting at least one thermoformed object (51) surrounded by residual web (57), punch and die cutting means (52,54) for each thermoformed object (51), and is **characterised in that** the said cutting means (52, 54) have cutting edges at which at least one recess (55) is provided which is designed to ensure that a very small connection area, or witness bead (58), is formed between thermoformed object (51) and residual web (57).

## Patentansprüche

1. Verfahren zum Thermoformen und Zuschneiden mit folgender Schrittfolge:
- Intermittierendes Beschicken eines Bandes oder einer Platte eines thermoformbaren Materials zu einer thermoformenden Presse;
- Thermoformen und teilweises Zuschneiden des Bandes oder der Platte innerhalb einer Form, um mindestens einen thermogeformten Gegenstand zu gewinnen, der von einer Restmatrix umgeben ist;
**dadurch gekennzeichnet, dass** die Operation des teilweisen Zuschneidens durch lochende und die Form zuschneidende Mittel (52,54) ausgeführt wird, und dass das Zuschneiden entlang des gesamten Umfangsrands jedes thermogeformten Gegenstands bewirkt wird, und mindestens eine Diskontinuität (55) mit der Bildung mindestens eines sehr kleinen Verbindungsbereichs oder "witness bead" (Beweisrand) (58) zwischen jedem thermogeformten Gegenstand (51) und der Restmatrix (57) vorgesehen ist.

2. Verfahren nach Patentanspruch 1,
**dadurch gekennzeichnet, dass** nach der Operation des teilweisen Zuschneidens der/die thermogeformte/-n Gegenstand oder Gegenstände (51) von der thermoformenden Presse (46) durch die thermoformende Restmatrix (57), die daran an jedem "witness bead"(Beweisrand) (58) verbunden ist, weg bewegt werden.

3. Vorrichtung zum Ausführen des Verfahrens nach Patentanspruch 1 oder 2, mit mindestens einer Presse (46) zum Thermoformen und zum teilweise Zuschneiden in der Form (48, 50) mindestens eines thermogeformten Gegenstands (51), der durch Restmatrix (57) umgeben ist, mit lochenden und zuschneidenden Mitteln (52,54) für jeden thermogeformten Gegenstand (51),
**dadurch gekennzeichnet, dass** die Zuschneidemittel (52,54) Schneidkanten besitzen, an denen mindestens eine Aussparung (55) vorhanden ist, die so ausgelegt ist, dass gewährleistet wird, dass ein sehr kleiner Verbindungsbereich, oder "witness bead" (Beweisrand) (58), zwischen dem thermogeformten Gegenstand (51) und der Restmatrix (57) gebildet ist.

## Revendications

1. Procédé de thermoformage et de détourage comprenant la séquence d'étapes suivante :
- alimentation d'une presse de thermoformage de manière intermittente avec une bande ou une plaque d'un matériau thermoformable ;
- thermoformage et détourage partiel de ladite bande ou plaque dans un moule pour obtenir au moins un objet thermoformé entouré par une bavure ;
**caractérisé en ce que** ladite opération de découpage partiel est réalisé par des moyens de détourage à poinçon et matrice (52, 54) et **en ce que** ledit détourage est effectué tout le long du bord périphérique de chaque objet thermoformé et fournit au moins une discontinuité (55) avec formation d'au moins une très petite zone de connexion ou « cordon témoin » (58) entre chaque objet thermoformé (51) et ladite bavure (57).

2. Procédé selon la revendication 1, **caractérisé en ce qu'**après ladite opération de détourage partiel, le ou les objets thermoformés (51) sont retirés de la presse de thermoformage (46) au moyen de ladite bavure de thermoformage (57) en étant connecté à celle-ci au niveau de chaque cordon témoin (58).

3. Dispositif pour mettre en oeuvre le procédé selon la revendication 1 ou 2, comprenant au moins une presse (46) pour le thermoformage et le détourage partiel en moule (48, 50) d'au moins un objet thermoformé (51) entouré par une bavure (57), des moyens de détourage à poinçon et matrice (52, 54) pour chaque objet thermoformé (51), et **caractérisé en ce que** lesdits moyens de détourage (52, 54) ont des arêtes de coupe au niveau desquelles est formée au moins une entaille (55) qui est conçue pour assurer qu'une très petite zone de connexion, ou cordon témoin (58), est formée entre l'objet thermoformé (51) et la bavure (57).
